## Europäisches Patentamt

## European Patent Office

## Office européen des brevets

(11) Publication number: **0 061 489**
**B1**

(12) **EUROPEAN PATENT SPECIFICATION**

(45) Date of publication of patent specification: **17.07.85**

(51) Int. Cl.⁴: **B 41 J 3/12, G 06 F 3/14**

(21) Application number: **81902846.5**

(22) Date of filing: **25.09.81**

(86) International application number:
**PCT/US81/01310**

(87) International publication number:
**WO 82/01164 15.04.82 Gazette 82/10**

(54) **CHARACTER FORMAT CONTROL APPARATUS AND METHOD.**

(30) Priority: **06.10.80 US 194731**

(43) Date of publication of application:
**06.10.82 Bulletin 82/40**

(45) Publication of the grant of the patent:
**17.07.85 Bulletin 85/29**

(84) Designated Contracting States:
**DE FR GB NL**

(56) References cited:
**US-A-4 169 684**
**US-A-4 204 777**
**US-A-4 278 359**

**IBM Technical Disclosure Bulletin, Issued
January 1973, pp. 2365-2366, DATILLO**

(73) Proprietor: **NCR Corporation
World Headquarters
Dayton, Ohio 45479 (US)**

(72) Inventor: **KENYON, Keith, Leroy
35 Dearfield Lane
Ithaca, NY 14850 (US)**

(74) Representative: **Robinson, Robert George
International Patent Department NCR Limited
206 Marylebone Road
London NW1 6LY (GB)**

Courier Press, Leamington Spa, England.

## Description

### Technical Field

This invention relates to character format control apparatus of the kind for formatting characters wherein each character is formed by a plurality of successive rows including dots or similar indicia arranged within a matrix cell having matrix positions occupied by such dots or indicia, including buffer storage means adapted to store input data defining characters to be formatted, character generator means adapted to be addressed in dependence on the stored input data, to provide output data in successive rows stored in said character generator means in accordance with the matrix cell arrangement, and first and second counter means.

The invention also relates to a method of controlling the formatting of characters.

Character format control apparatus finds application in printing apparatus, for example dot matrix printers, and in display devices.

### Background Art

Character format control apparatus is known from U.K. Published Patent Application No. 2,102,464. According to this known apparatus input data represents characters to be printed in dot matrix form. The known apparatus can print characters in a selected one of two character fonts. However, the known apparatus has the disadvantage of limited versatility in character formatting. Since it is the memory or the character generator means alone which stores the character data for said fonts and also provides for the data representative of the spacing between the symbols printed out.

U.S. Patent Specification No. 4,169,684 discloses a matrix printer having character format control apparatus including a character generator which contains data concerning the spacing between characters to be printed.

An article in IBM Technical Disclosure Bulletin, Vol. 15, No. 8, January 1973, pages 2365—2366 discloses the concept of a character generator which generates a line of proportionally spaced characters for use in a raster printer. Thus, there is disclosed a memory matrix cell in which a character to be printed is stored such that a marginal zone of unoccupied matrix positions can at least partially be omitted when printing so as to vary the spacing between characters in the direction of the line of printed characters. However, this publication does not disclose a practical embodiment which can alter vertical spacing as well as horizontal spacing between the printed characters.

### Disclosure of the Invention

It is an object of the present invention to provide apparatus of the kind specified wherein the aforementioned disadvantage is alleviated.

Therefore, according to the present invention, there is provided character format control apparatus of the kind specified, characterized in that there is provided mode control means adapted to produce a plurality of mode control signals corresponding to respective character spacing arrangements, in that said first counter means is adapted to be set in response to a selected mode control signal to count a first selected number of matrix positions per matrix row, which selected number is determined by said selected mode control signal, in that said second counter means is coupled to said character generator means and is adapted to be set in response to said selected mode control signal to count a second selected number of successive matrix rows, which selected number is determined by said selected mode control signal, and in that there is provided register means coupled to said character generator means and to said first counter means and adapted to provide successive rows of formatted information for matrix reproduction, each row including said first selected number of matrix positions.

It will be appreciated that apparatus according to the invention enables character spacing in each of two dimensions to be varied without hardware alterations to the apparatus.

It will also be appreciated that in the arrangement according to the invention, spacing information is obtained externally to the character generator by the use of first and second counter means connected and arranged to be operated as specified in claim 1. This contrasts with the arrangement disclosed in the aforementioned U.S. Patent Specification No. 4,169,684 wherein the data concerning the spacing between the characters is contained in the character generator.

According to another aspect of the present invention, there is provided a method of controlling the formatting of characters, wherein each character is formed by a plurality of successive rows including dots or similar indicia arranged within a matrix cell having matrix positions occupied by such dots or indicia, including the steps of inputting data defining characters to be formatted, and addressing a memory in dependence on the inputted data in order to provide output data, stored in said memory, in successive rows in accordance with the matrix cell arrangement, characterized by the steps of selecting a first desired number of matrix positions per matrix row for the characters to be formatted, which first number is representative of a desired character spacing in the direction of said matrix rows, selecting a second desired number of successive matrix rows for characters to be formatted, which second number is representative of a desired character spacing in a direction perpendicular to the matrix rows, providing a row of formatted character information having said first desired number of matrix positions and including the outputted data, and repeating said step of providing a row of formatted character information a number of times corresponding to said second desired number.

## Brief Description of the Drawings

One embodiment of the present invention will now be described by way of example with reference to the accompanying drawings, in which:

Figs. 1A and 1B, taken together, constitute a block diagram of format control apparatus;

Fig. 2 is a diagram of a typical character cell;

Figs. 3, 4 and 5 illustrate various character formats which may be selectively employed;

Fig. 6 shows a plurality of wave forms associated with the format control apparatus and how they vary in different operating modes;

Figs. 7A to 7H inclusive, taken together, constitute a circuit diagram showing the character counter, buffer, character generator and gating logic included in the apparatus of Fig. 1;

Figs. 8A to 8D inclusive, taken together, constitute a circuit diagram showing the row counter, mode control and read/write control included in the apparatus of Fig. 1;

Figs. 9A to 9D inclusive, taken together, constitute a circuit diagram showing the divide-by-eight circuit and the clock divider circuit included in the apparatus of Fig. 1;

Fig. 10 constitutes a circuit diagram showing the parallel-in-serial-out shift register included in the apparatus of Fig. 1;

Fig. 11 constitutes a circuit diagram showing the serial-in-parallel-out shift register and the latch included in the apparatus of Fig. 1; and

Fig. 12 is a group of diagrams showing the manner in which Figs. 7A to 7H, 8A to 8D, and 9A to 9D are assembled to form circuit diagrams.

## Detailed Description

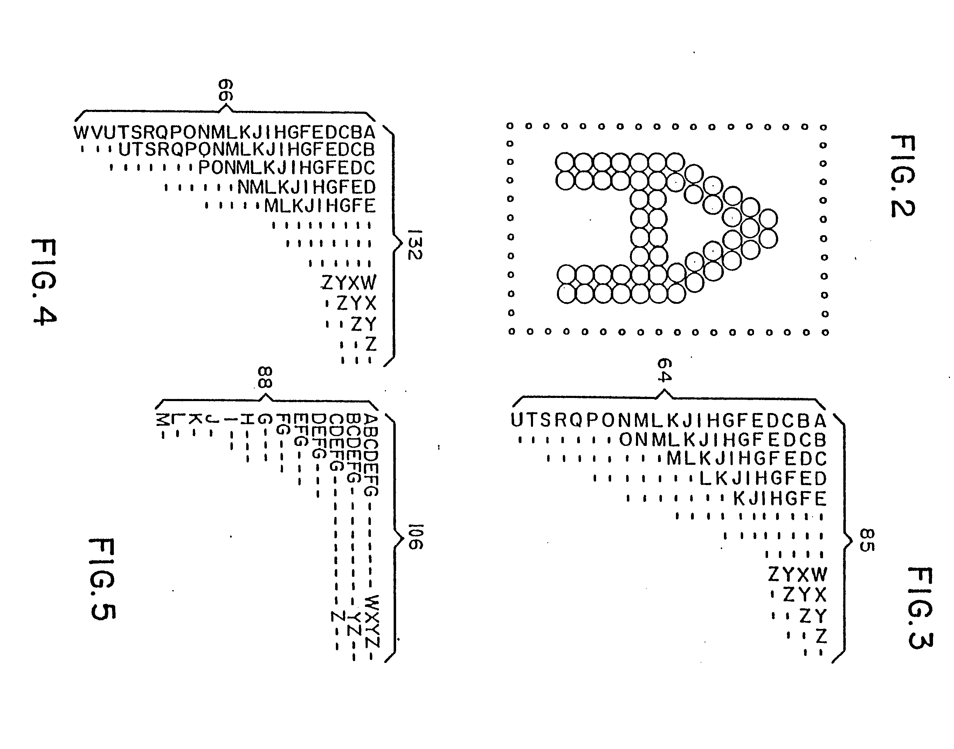

Referring now to Fig. 2 of the drawings, there is shown a representative "cell" containing a character, such as a letter, number or symbol, therein. A plurality of such cells, each containing a character, are generated by the system of the invention to provide data which may be displayed or printed. In the illustrated embodiment of the invention, each cell comprises a plurality of locations on which dots or other indicia may selectively appear, so that a predetermined configuration of dots within each cell can provide any one of a large number of characters, including English letters, numbers, symbols, or foreign language characters, such as Japanese katakana, for example. In the illustrated embodiment of the invention, each cell is of rectangular configuration and has maximum dimensions of 12 dot locations by 20 dot locations, with the character contained therein having maximum dimensions of 8 × 14 dot locations. "White" spaces in which no dots are printed or displayed, surround each character, so that adjacent characters do not run into each other, and so that in appropriate instances, as will be further described in greater detail, rows or columns of dot locations outside the character area but still within the cell area may be deleted from the cell, in order to alter the dimensions of the cell, and thus change the number of characters which can be displayed or printed in a character line of predetermined length.

It should also be noted that the cell, and the character within, may be generated in more than one orientation. Thus the character within the cell of Fig. 2 is vertically orientated, while a character within another cell may be horizontally orientated. While the system of the present invention is capable of producing a large number of different character spacing arrangements, three different arrangements will be specifically described in the present description. In the first of these arrangements, shown fragmentarily in Fig. 3, and referred to hereinafter as mode I, a printing or display arrangement of 85 × 64 characters is provided, with each character being laid on its side, or horizontal, as viewed in the drawings, and as printed. In this arrangement the cell dimension is 12 × 20.

In a second arrangement, shown fragmentarily in Fig. 4, and referred to hereinafter as mode II, the format is 132 × 66 characters, with the character in horizontal position, and the cell size being 12 × 19.

In a third arrangement, shown fragmentarily in Fig. 5, and referred to hereinafter as mode III, the format is 106 × 88 characters, with each character being in vertical position and the cell size being 12 × 19.

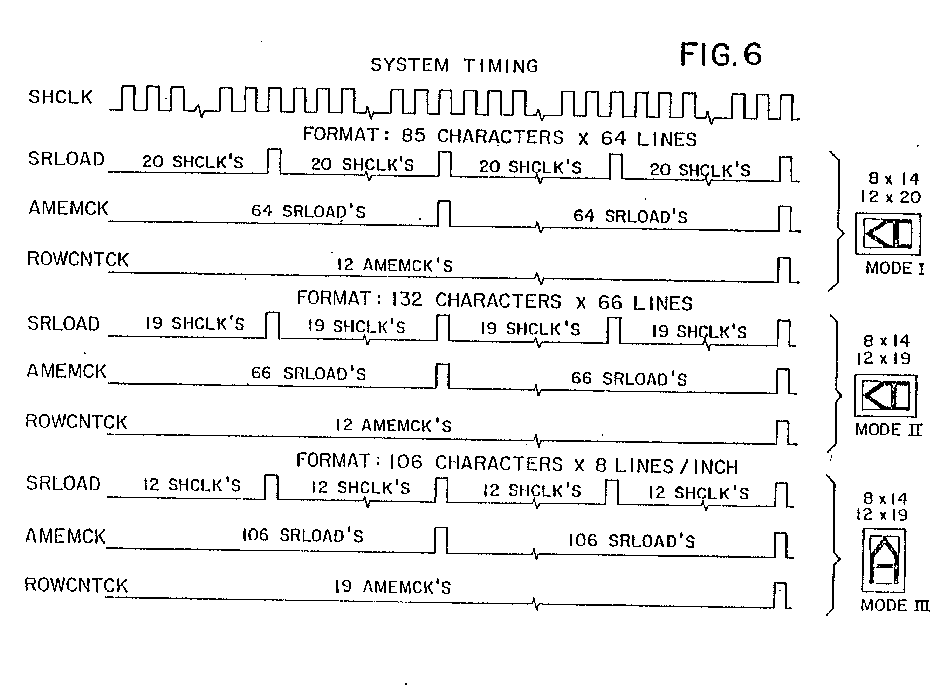

Wave forms utilized in the generation of each of these arrangements are shown in Fig. 6, and are subdivided in accordance with the different modes I, II and III in which they are used. References to these wave forms will be found in the detailed circuit diagrams and the accompanying descriptions.

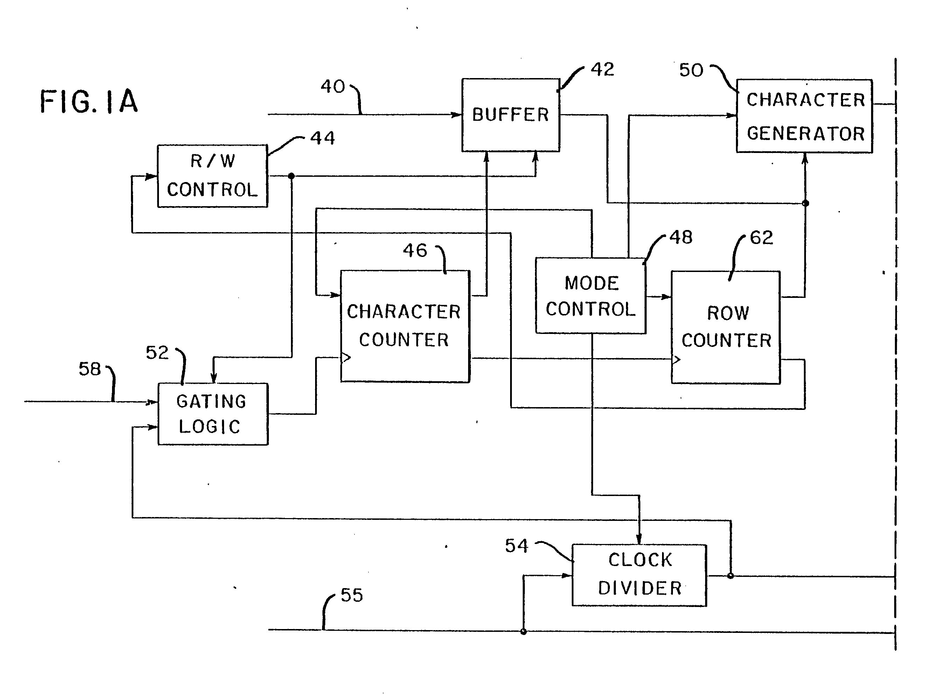

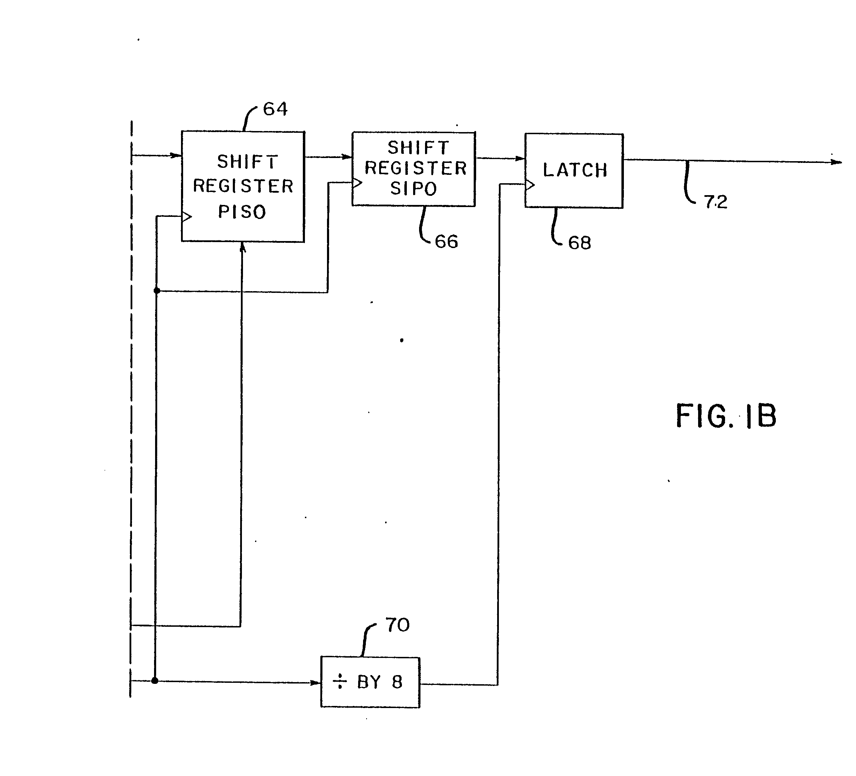

Referring now to Figs. 1A and 1B, the block diagram appearing therein shows the organization of various elements of the present invention.

Data to be printed or displayed is inputted to the system at terminal 40, and is applied to buffer 42, preferably though not necessarily in ASCII code, where it is stored, preparatory to being outputted in suitable form to other elements of the system for translation into the matrix form required for printing or display. The data is inputted to the buffer on eight parallel lines. During operation of the system, the buffer 42 is first loaded with data, in the form of an appropriate number of individual items, such as letters, numbers, etc. of data. Following completion of the loading operation, the data is outputted to other elements of the system for conversion into a form suitable for printing or display.

Another input to the buffer 42 comes from the read/write control represented by block 44. This determines whether the buffer 42 at a given time is in a "read" mode during which information contained in it is being read out to another part of the system, or in a "write" mode, during which information is being written into the buffer 42 from a computer or other outside agency through the terminal 40.

A third input to the buffer 42 comes from a character counter 46 which counts data items or characters into the buffer 42 during a write operation and out of the buffer 42 into a character generator 50 during a read operation. The total number of characters per line to be counted by the character counter is determined by a mode control 48 which is responsive to a mode select data input from the utilizing device associated with the system of the present invention. For purposes of illustration it will be assumed that the system of Fig. 1 is operating in "mode I", in which the individual characters are printed in horizontal orientation, with 64 characters per line and 85 lines, as shown in Fig. 3. Therefore the block 48 sets the character counter 46 to provide 64 characters per line. The count carried in the character counter is incremented by a signal from gating logic 52, which in turn is actuated by a "read clock" signal from a clock divider 54, the setting of which is controlled by the mode control 48. In mode I, the mode control 48 sets the clock divider 54 to a value of 20. The divider 54 is driven by a system clock applied to terminal 55. It may be noted that the gating logic 52 is also controlled by signals from the read/write control 44 and by a write clock applied to a terminal 58.

The mode control 48 also determines the setting of a row counter 62, which cooperates with the buffer 42 in selecting the specific address of the character generator 50 which is to be read out. In mode I, the row counter 62 is set to a value of 12. The row counter 62 also provides an output signal to the read/write control 44, and is controlled in part by a terminal count signal from the character counter 46.

It may also be noted that the mode control 48 performs a font or pattern selection with respect to the character generator 50, in accordance with whatever input has been applied to said mode control 48.

Eight bits from the buffer 42, representing a particular character, plus four bits from the row counter 62, representing the desired row of that character, form the address in each case for accessing the character generator 50, which responds by outputting sixteen parallel bits representing the dot pattern of a given row of a given character to a shift register 64. The register 64 is of the parallel-in-serial-out type and provides a serial output to a second shift register 66, which is of the serial-in-parallel-out type. Both of the registers are driven by the system clock applied to the terminal 55.

A further input to the shift register 64 is supplied by the clock divider 54, which provides a count determinative of the number of bits transmitted serially from shift register 64 to shift register 66. In mode I operation, this count is 20. Since only sixteen bits are transmitted from the character generator 50 to the shift register 64, this means that four extra bits representing non-printed-upon locations, providing blank or "white" space, are added in each instance to the sixteen character bits received from the character generator 50.

In another mode of operation, the count from the clock divider 54 might be a number less than sixteen bits, such as twelve, for example. In such case, the last four bits would be lost, and only twelve bits would be transmitted to shift register 66. The dot format of the characters is arranged within the cell so that the four dot positions that are eliminated reduce the space around the actual character font count, so that the character itself is not affected, but rather the spacing between characters. This permits selection of a different total number of characters per line in accordance with the operating mode selected.

The output from the shift register 66 is applied over eight parallel lines to a latch 68 which is clocked by a clock signal derived from the system clock divided by eight by the block 70. Thus the twenty bits input serially to the shift register 66 are applied to the latch 68 in eight-bit segments, each such segment being held by the latch 68 until a printer or display or other utilizing device is ready to receive it, at which time it is applied thereto over the eight parallel outputs represented by reference character 72.

It may be seen from the above description, taken in conjunction with the block diagrams of Figs. 1A and 1B, that character font matrix patterns representing data which is inputted to the system at terminal 40 will be outputted from the output 72, and that the style, orientation and spacing of such character font matrix patterns may be varied in accordance with the particular operating mode selected.

One circuit arrangement for implementing the system broadly disclosed in Fig. 1 will now be described in detail.

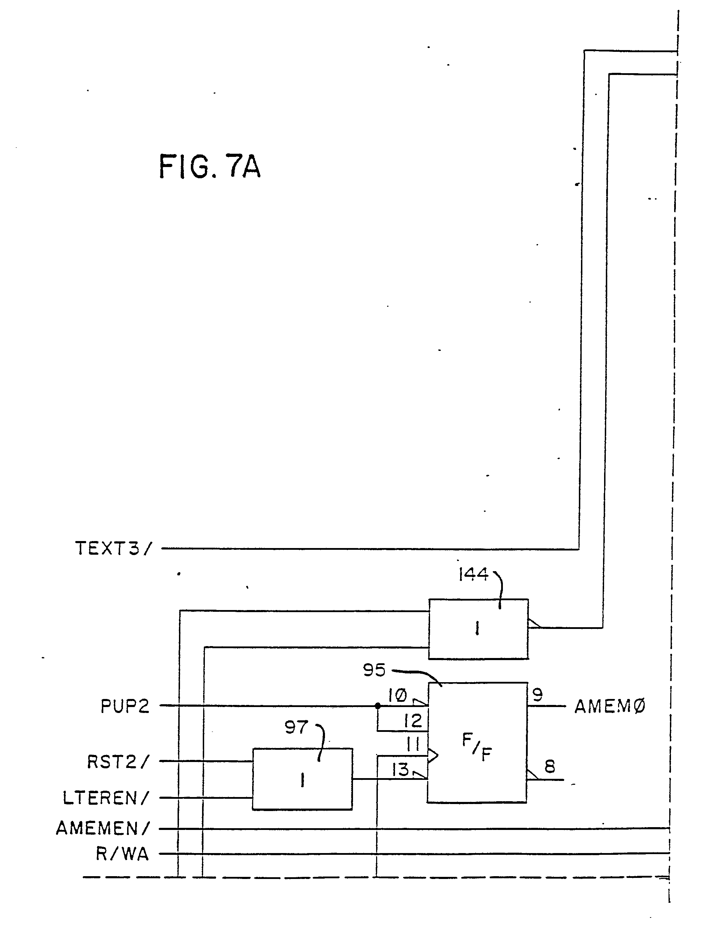

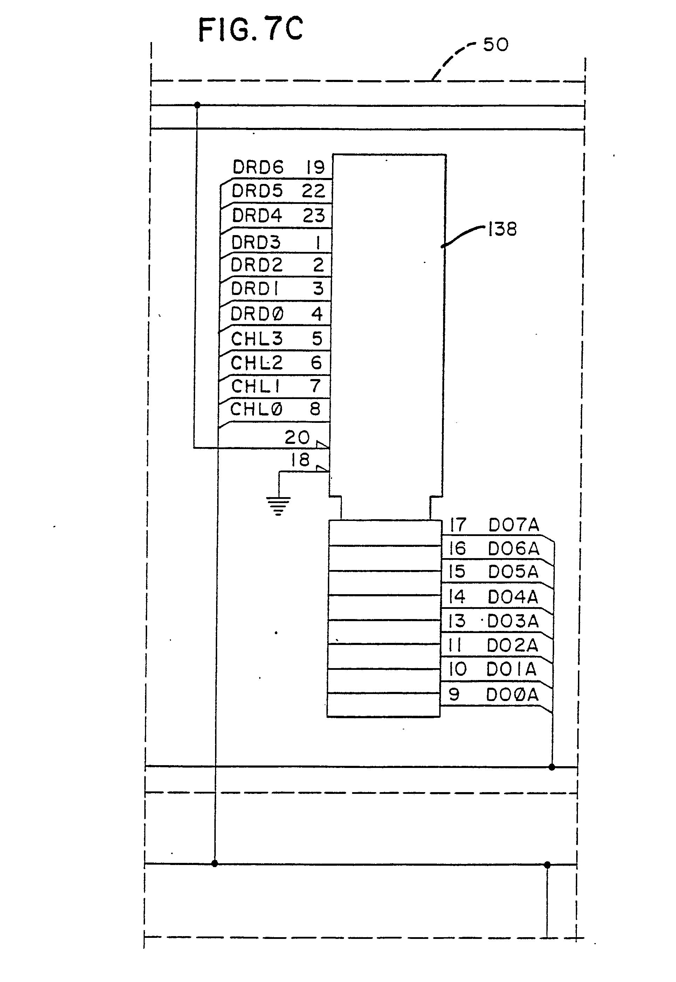

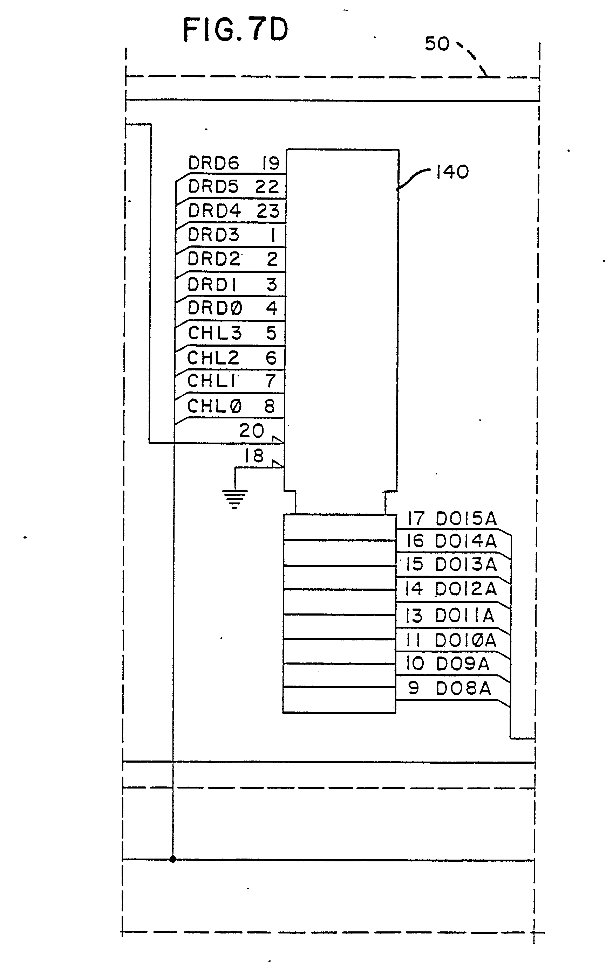

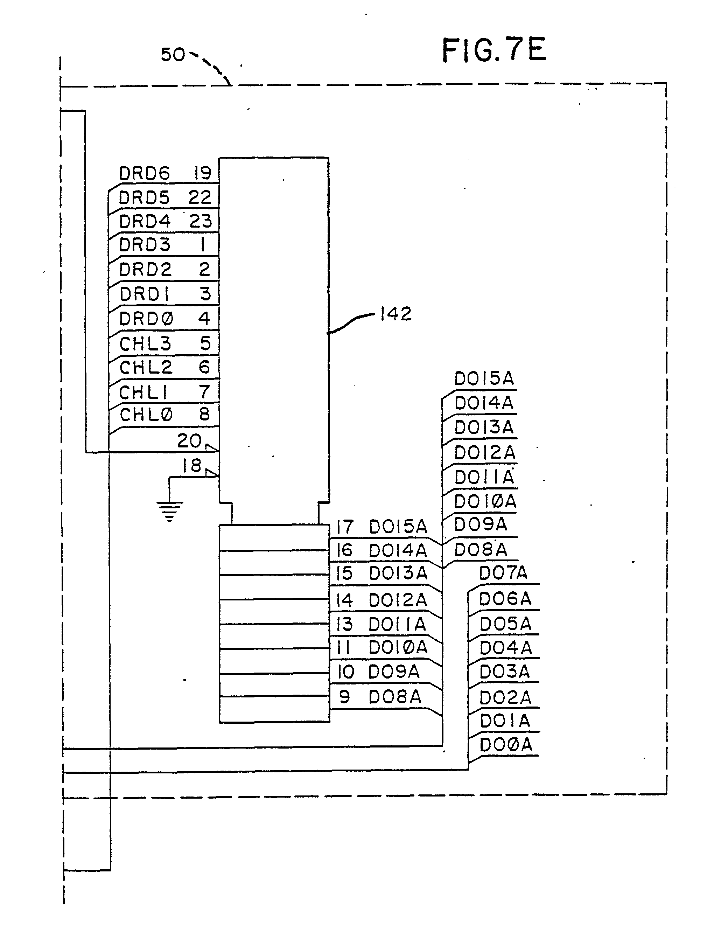

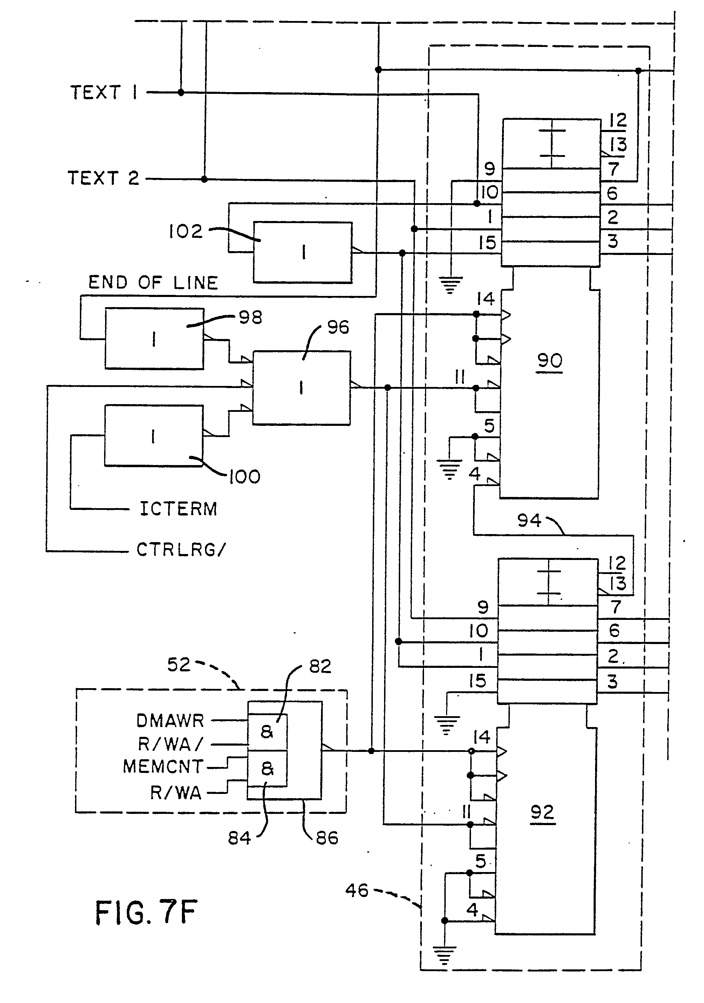

Gating logic block 52 is shown in detail in Fig. 7F and comprises and AND/OR gate 80 which may be of type 74LS51, and which includes a pair of AND gates 82, 84 and an OR gate 86. The AND gate 82 receives a write enable signal R/WA/ from the read/write control 44, and a write clock signal DMAWR from a system controlling the device of the present invention. The AND gate 84 receives a read enable signal R/WA from a read/write control block 44, as will be subsequently described in greater detail, and a read clock signal MEMCNT from the clock divider 54, as will subsequently be described.

Thus it will be seen that the coincidence of either a write and write enable signal or a read and read enable signal will result in the output of a signal from the gating logic block 52 which is applied to the character counter 46. This gating logic thus enables either the write clock or the read clock to be used by the counters 90, 92, depending upon which function is current at the time.

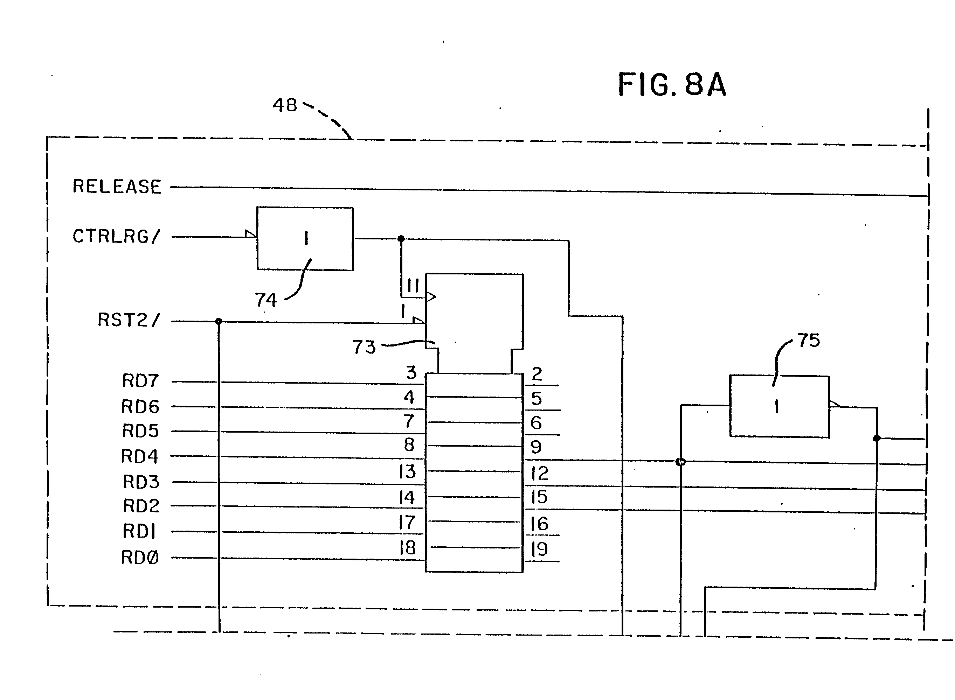

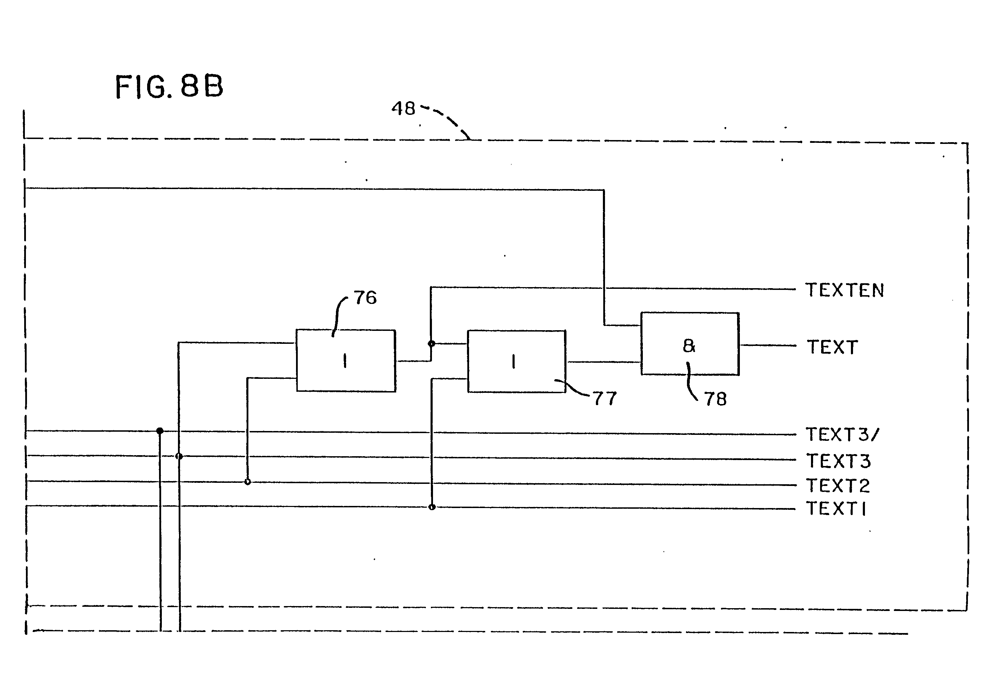

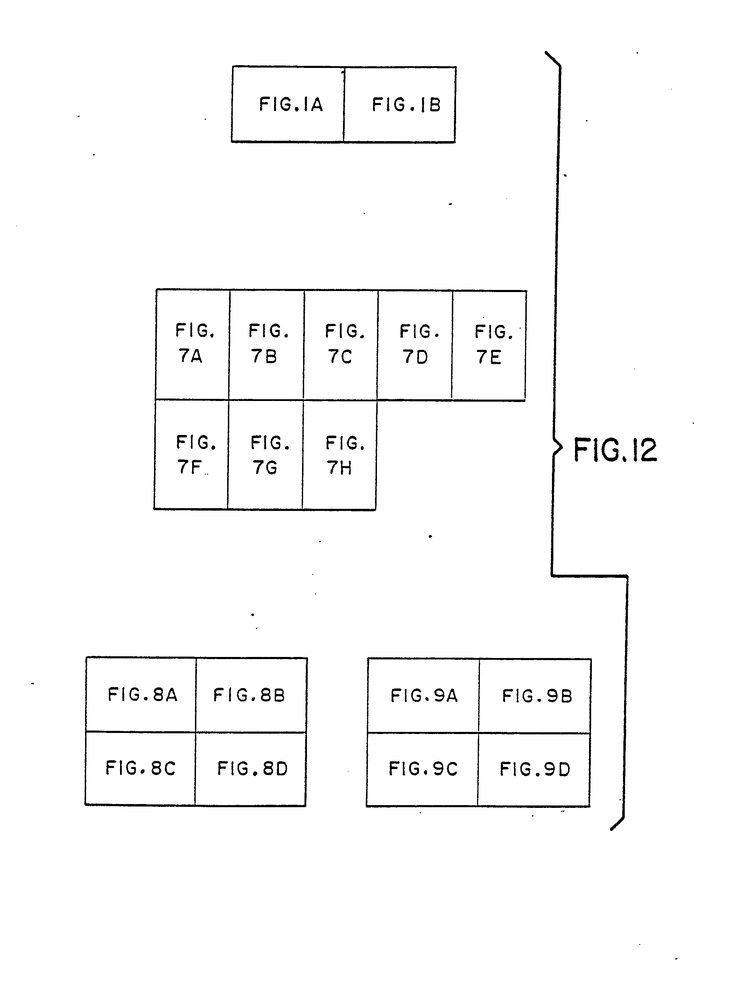

Mode control 48 is shown in greater detail in Figs. 8A and 8B, and includes a latch 73, which may be of type 74LS273. Data is written directly into this latch from the associated utilizing device on the lines RD0 to RD7, and is caused to be latched therein for the duration of the printing or display cycle by the signal CTRLRG/ applied to said latch through an inverter 74, which may be of type 74LS04, from the associated utilizing device. The signal RST2/ is a reset signal which assures that all of the outputs from the latch 73 are set to zero logic level when a reset command is received by the system from the utilizing device.

The outputs from the latch 73 which are relevant in the system of the present invention are TEXT1, TEXT2, and TEXT3, corresponding to mode I, mode II and mode III. These signals, or signals derived therefrom, are applied to the character counter 46, the row counter 62, the clock divider 54, and the character generator 50, to determine the specific mode in which the system is to operate at a given time.

An inverter 75, which may be of type 74LS04; two OR gates 76, 77, which may be of type 74LS32; and an AND gate, which may be of type 74LS08, are utilized with the TEXT1, TEXT2 and TEXT3 outputs from the latch 73 to provide TEXTEN, TEXT, and TEXT3/ signals.

As shown in Fig. 7F, and as defined by the dashed line 46, the character counter circuitry includes two up-counters 90, 92, which may be of type 74LS191, and which are interconnected by conductor 94.

The previously-mentioned output from the gating logic 52 is applied to corresponding inputs of both counters 90 and 92 for clocking or incrementing said counters. The outputs of these counters, taken together, constitute seven parallel bits of address which are applied to the buffer 42, as will subsequently be described.

Presetting of one of a plurality of predetermined values into the character counter 46 is accomplished by the selective application of TEXT1 and TEXT2 signals to predetermined inputs of the counters 90 and 92. It may be seen that the TEXT1 input applied to input 10 of counter 90 is inverted by inverter 102, which may be of type 74LS04, and subsequently applied to pin 15 of counter 90 and to pins 10 and 1 of counter 92. A TEXT3 selection is achieved by default; that is, through the absence of both a TEXT1 and a TEXT2 signal. It may be noted that in the illustrated embodiment, a TEXT1 signal causes a preset value of sixty-four in the character counter 46; a TEXT2 signal causes a preset value of sixty-six in the character counter 46; and a TEXT3 condition (absence of TEXT1 and TEXT2) causes a preset value of 106 in the character counter 46.

In addition to the preset and clock inputs, an initializing input is also provided for each of the counters 90, 92 for loading said counters. This input is taken from the output of a three-input OR gate 96, which may be of type 74LS32. One of the inputs receives a signal CTRLRG/, which is generated by another part of the system to provide for system initialization. The other two inputs of the gate 96 are connected to outputs of inverters 98, 100, which may be of type 74LS04, to the inputs of which, respectively, are connected an "END OF LINE" signal and an ICTERM signal, which is derived from the write circuitry of the system.

The outputs of counters 90, 92 designated A0 to A6 are preset in accordance with the combination of TEXT1, TEXT2 signals. That preset value, together with the signals AMEMEN/ and R/WA, constitutes the initial address which is applied to the buffer 42. Each subsequent clock pulse applied to character counter 46 by the gating logic 52 increments the address by one, until the value represented by lines A0—A6 is at its maximum of all "ones". It will thus be seen that for the different operating modes, there may be different initial addresses applied to the buffer 42, and that the total character count in each case is equal to the difference between the maximum value of 128 in the illustrated embodiment and the preset value.

When the lines A0 to A6 are all ones, the next clock pulse causes these lines to be reset to zero, and also causes line AMEMCK to go to a value of one. Line AMEMCK is connected to the input of the inverter 98 and thus has the effect of presetting the character counter 46 once more to the preset value determined by the combination of signals TEXT1 and TEXT2. Line A7 also provides the clock signal AMEM0. Said line is applied to the clock input of a flip-flop 95, which may be of type 74LS74, the output of which constitutes the signal AMEM0. Pins 10 and 12 of flip-flop 95 are connected to line PUP2, which is connected over a resistor to a plus 5-volt source. Input 13 of flip-flop 95 is connected to the output of an AND gate 97, which may be of type 74LS08, the inputs of which are connected to signals RST2/ and LTEREN/.

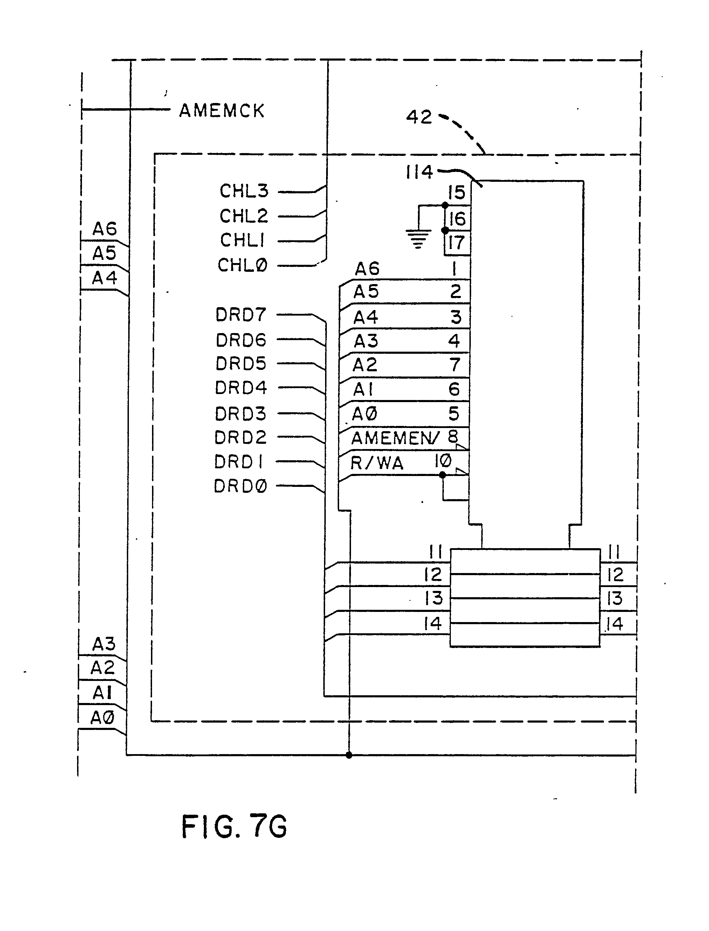

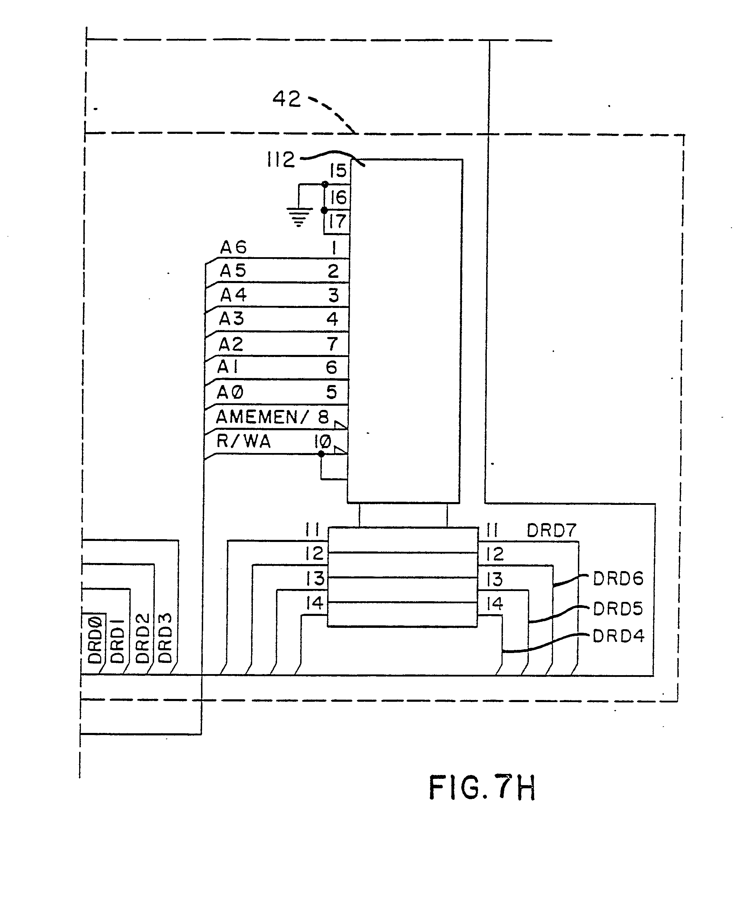

The address lines A0—A6 inclusive from the line counter 46, together with the signals AMEMEN/ and R/WA, are applied to inputs of the buffer 42 (Figs. 7G and 7H).

The signal AMEMEN/ is a buffer memory enable signal which originates in the utilizing device with which the system of the present invention is employed.

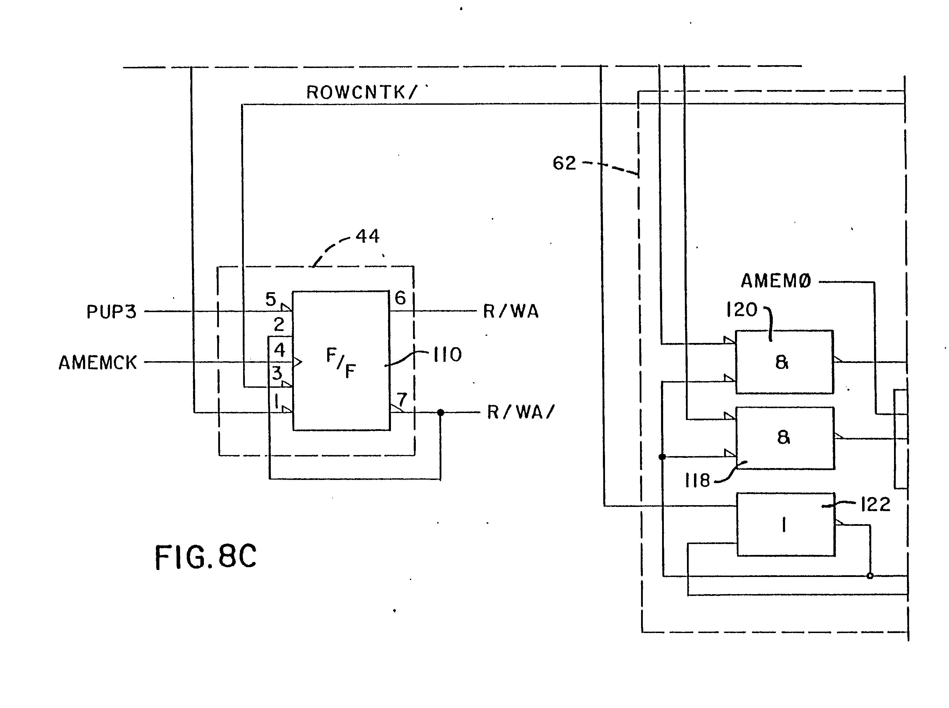

The R/WA signal is a read/write control signal generated by the read/write control block 44, which is shown in detail in Fig. 8C, and which includes a flip-flop 110, which may be of type 74LS109. The "Set" input of the flip-flop 110 is connected to a line PUP3, which comprises a connection to a plus 5-volt source through a 1,000 ohm resistor; the clock input is connected to a conductor on which appears the signal AMEMCK, derived from the output pin 7 of the counter 90 (Fig. 7F); the "J" input is a feedback connection from the negative output of flip-flop 110, and causes the flip-flop to set whenever an AMEMK signal is received; an output signal ROWCNTCK/ of the row counter 62 is connected to the "K" input of the flip-flop; and an RST2/ signal is applied to the reset terminal of the flip-flop for causing said flip-flop to be set to the write mode whenever the system is powered up or otherwise initialized. The signal from the row counter 62 applied to the input "K" indicates that the last row of dot positions for a character is being read out of the character generator 50, and causes the flip-flop 110 to toggle back to the write mode, so that another line of new characters can be written into the buffer 42.

Returning now to the buffer 42 (Figs. 7G and 7H), this includes two 4K static random access memories 112 and 114, which may be of type 2114-2. As previously described, the buffer 42 functions both in a write mode, in which it receives and stores data, and in a read mode, in which data is read therefrom and input to the character generator 50.

During either a write or a read operation of the buffer 42, the signal AMEMEN/, applied to both memories 112 and 114, must be at a low logic level. This signal is an enable signal which originates in a utilizing device outside the system.

During a write operation, in which data is input to the buffer 42, the signal R/WA is at a low logic level. Data from an external source is applied to the memories 112, 114 from the terminals DRD0—DRD7 inclusive, and stored therein in accordance with addresses provided by the character counter 46 on the lines A0—A6, as previously described.

During a read operation, in which data is accessed from the buffer 42 and applied to the character generator 50, the signal R/WA is at a high logic level. The addresses for accessing this stored data are provided by the character counter on the lines A0—A6, as previously described.

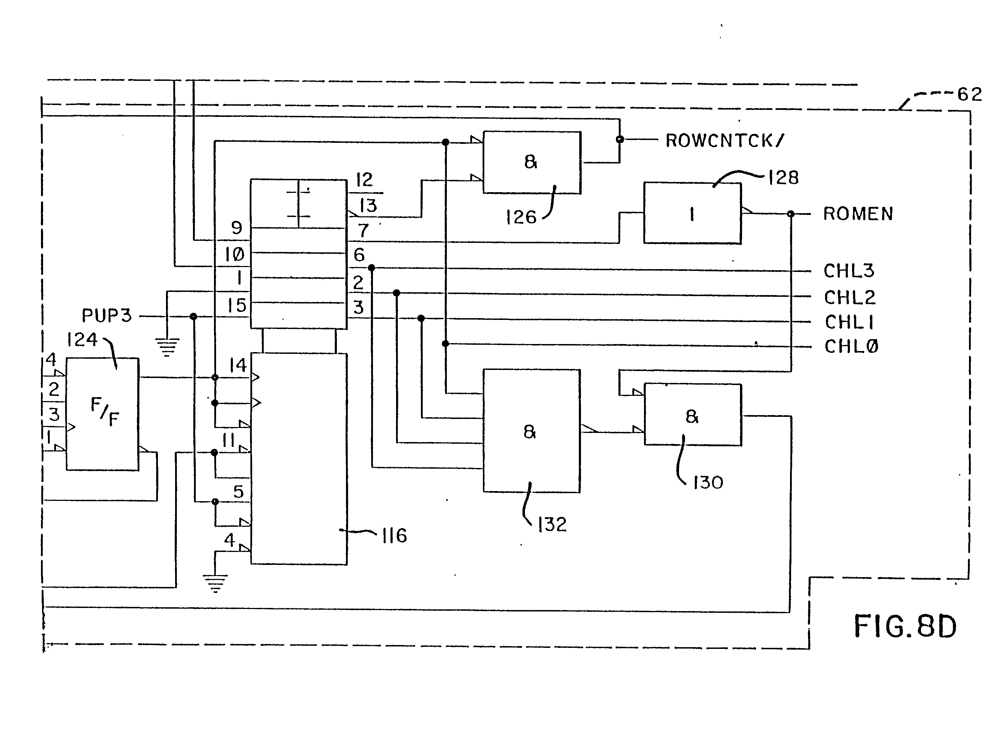

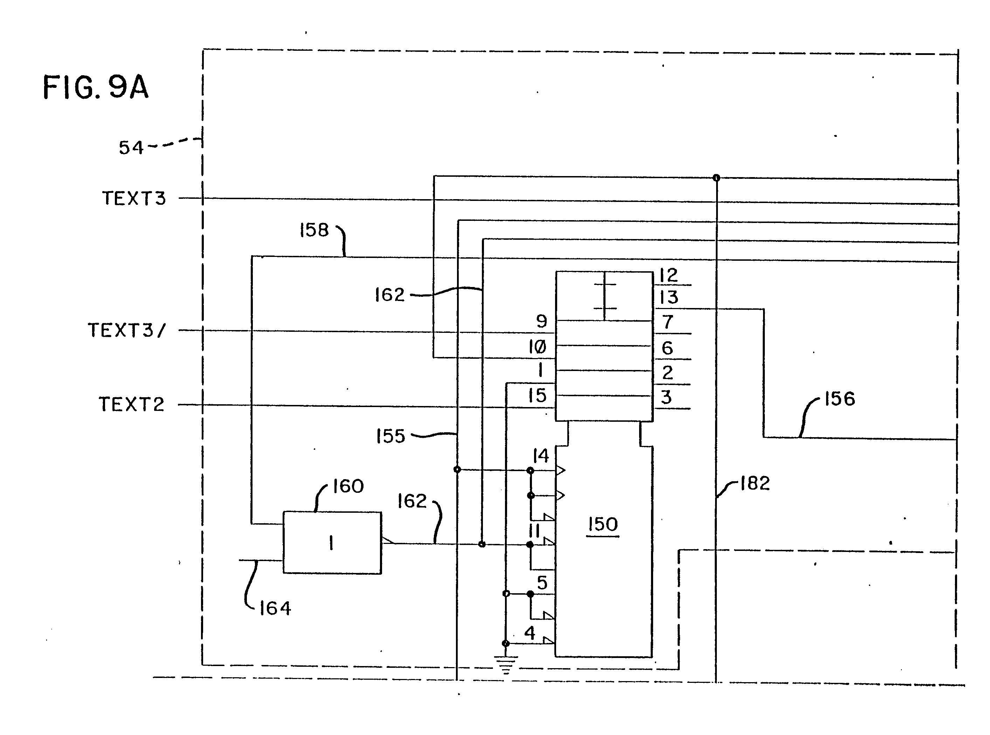

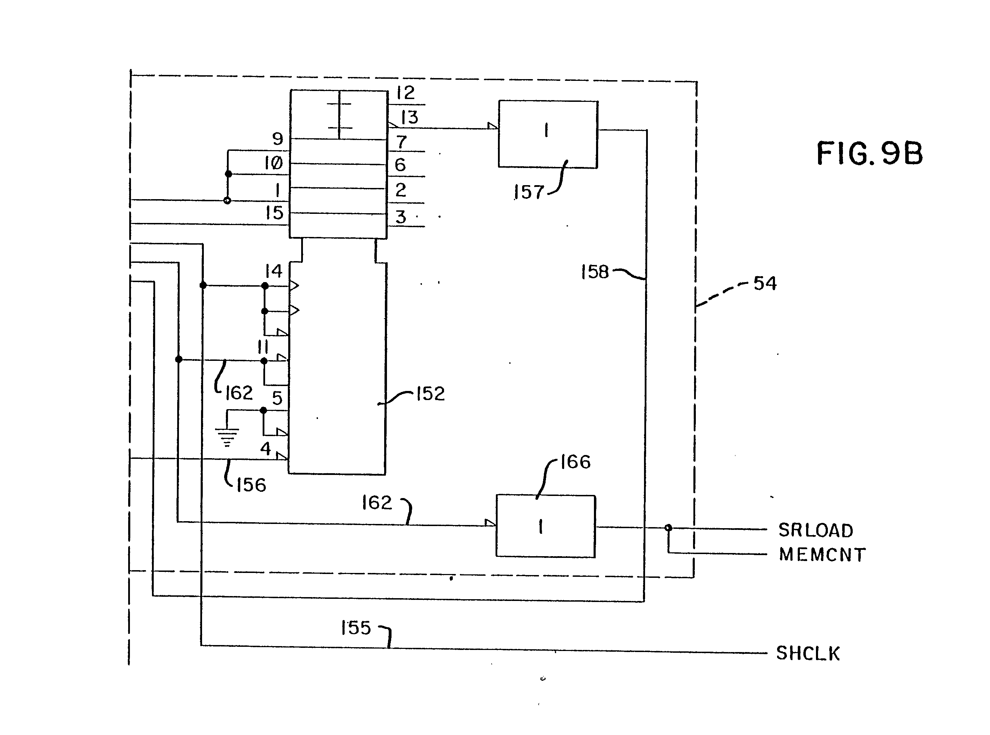

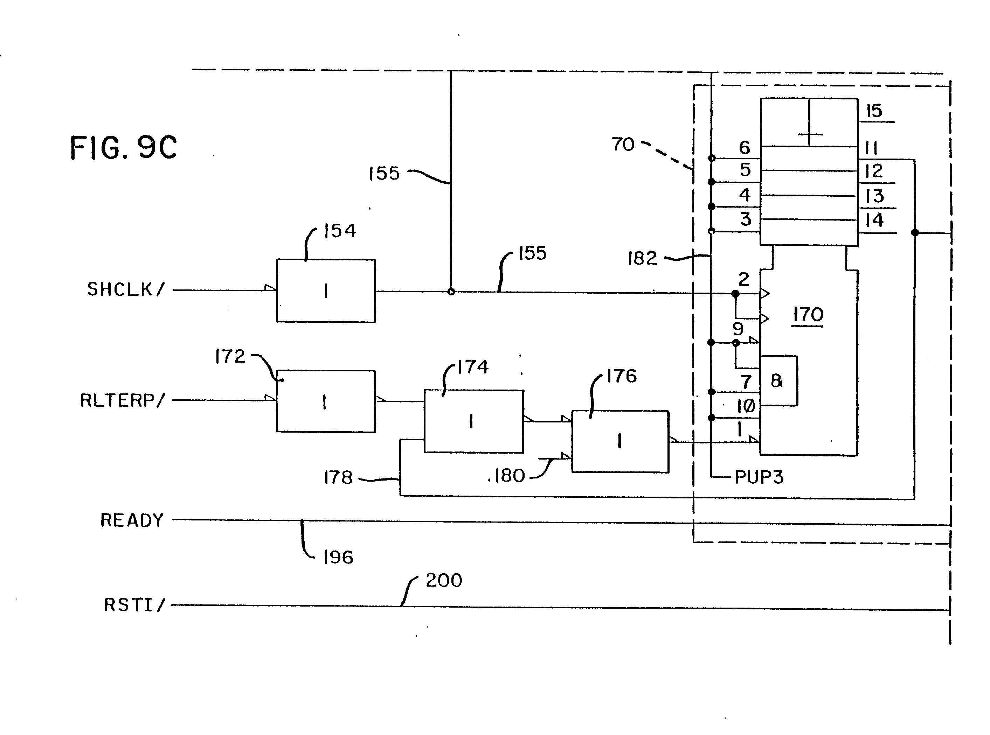

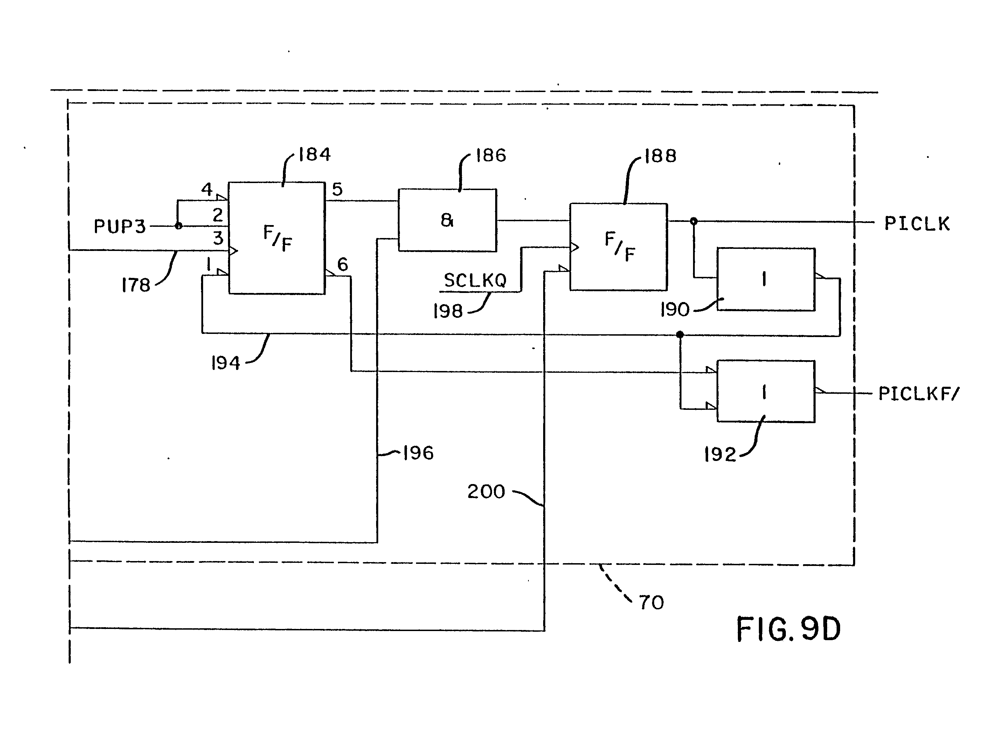

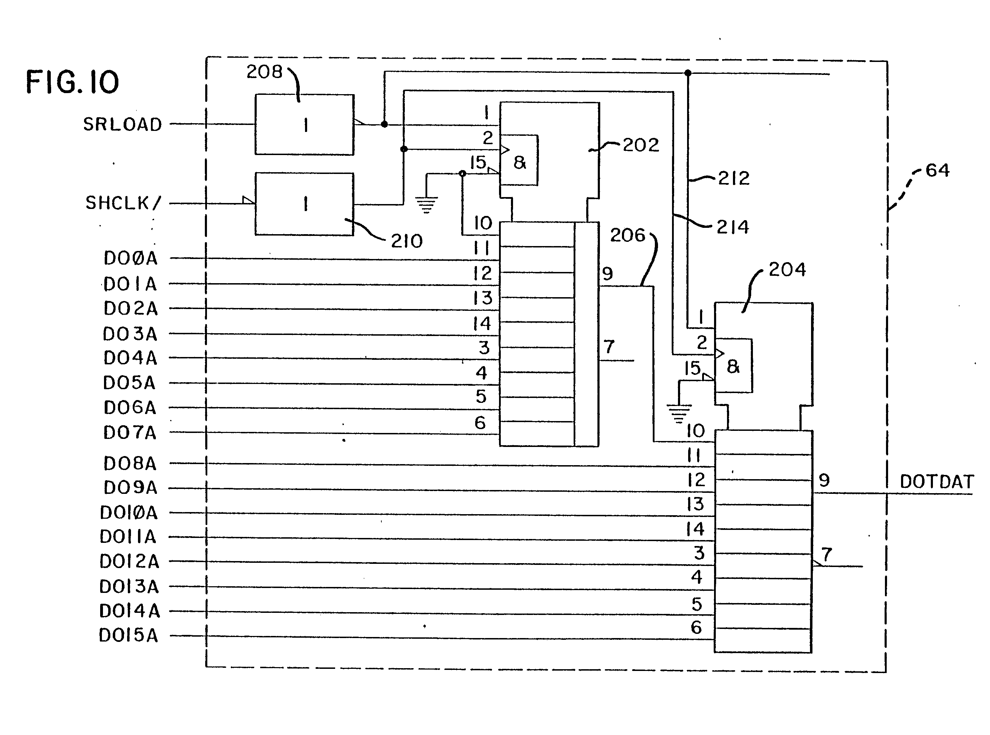

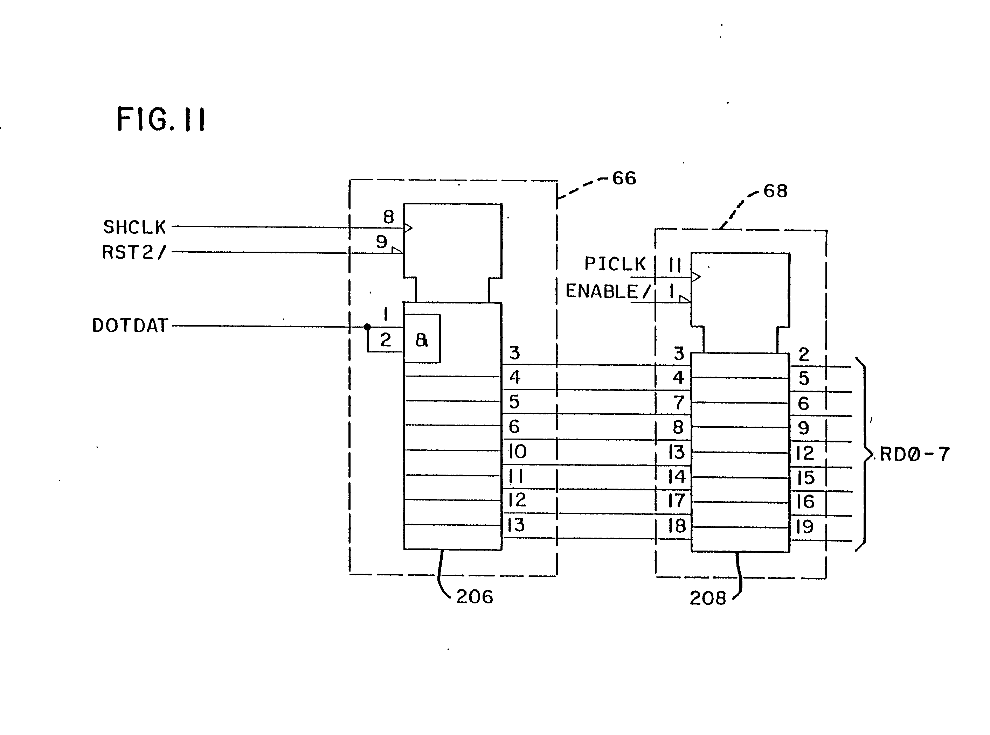

The row counter 62 is shown in detail in Figs. 8C and 8D, and includes an up-down counter 116, which may be of the type 74LS191. Inputs to the counter 116 include signals from the mode control block 48, as shown in Figs. 8A and 8B, and from other sources. Certain of these inputs are applied directly, while others are applied through logic circuitry which includes two OR gates 118, 120, which may be of type 74LS32; a NOR gate 122, which may be of type 74LS02; and a flip-flop 124, which may be of type 74LS74.

The outputs from the counter 116 include signals CHL1, CHL2 and CHL3. In addition, an output signal CHL0 is provided from the flip-flop 124. The signals CHL0—CHL3 provide the least significant part of the address for the character generator 50.

The signal CHL0 is also an input to the counter 116, and an input to an OR gate 126, which may be of type 74LS32. A second input to that gate is taken from output pin 13 of the counter 116. The output signal ROWCNTCK/ of the gate 126 provides one input to the read/write control 44, previously described.

A signal ROMEN is provided by one of the outputs from the counter 116, inverted by an inverter 128, which may be of type 74LS04. The signal ROMEN provides one input to a NOR gate 130, which may be of type 74LS02. A second input to the gate 130 is provided by the output of a four-input NAND gate 132, which may be of type 74LS20, to which inputs the signals CHL0—CHL3 are applied. The output of the gate 130 is applied to one input of the previously mentioned gate 122, the other input of which is taken from the output of the previously mentioned gate 74.

The row counter 62 is preset by the mode control 48 to a value of either 12, 12 or 19 in the illustrated embodiment, depending upon whether the system is operating in mode I, (as assumed for purposes of the present discussion), mode II or mode III, respectively. This presetting takes place at the beginning of a read cycle, and the counter 62 is then incremented once for each dot matrix row contained in the line of characters being read. When the final dot matrix row is read, the row counter 62 is preset in preparation for the reading operation to be performed on the next line of characters which has been stored in the buffer 42. The gates 130 and 132 provide a detect circuit for detecting the reading of the last dot matrix row, by causing a signal to be applied to one input of the gate 122, the output of which effects the loading of the counter 116 with the preset value supplied to pins 9, 10, 1, and 15 of said counter.

The counter 116 is clocked by the output from the flip-flop 124 being applied to pin 14 of said counter 116. The flip-flop 124, in turn, is clocked by the signal AMEM0, which, it will be recalled, is generated by the pin 7 output of the counter 90 of the character counter 46. The clock input to the counter 116 has one half the frequency of the signal AMEM0, due to the well known mode of operation of the flip-flop.

The combination of the flip-flop 124 and the counter 116 actually comprises a 5-bit counter, providing the output signals CHL0—CHL3 and ROMEN which enable an address count of up to twenty to be received. The ROMEN signal is an enable signal which provides an indication that no additional dot matrix rows are available from a given font or pattern stored in the character generator 50, so that any additional dot matrix rows in a given cell must be entirely blank.

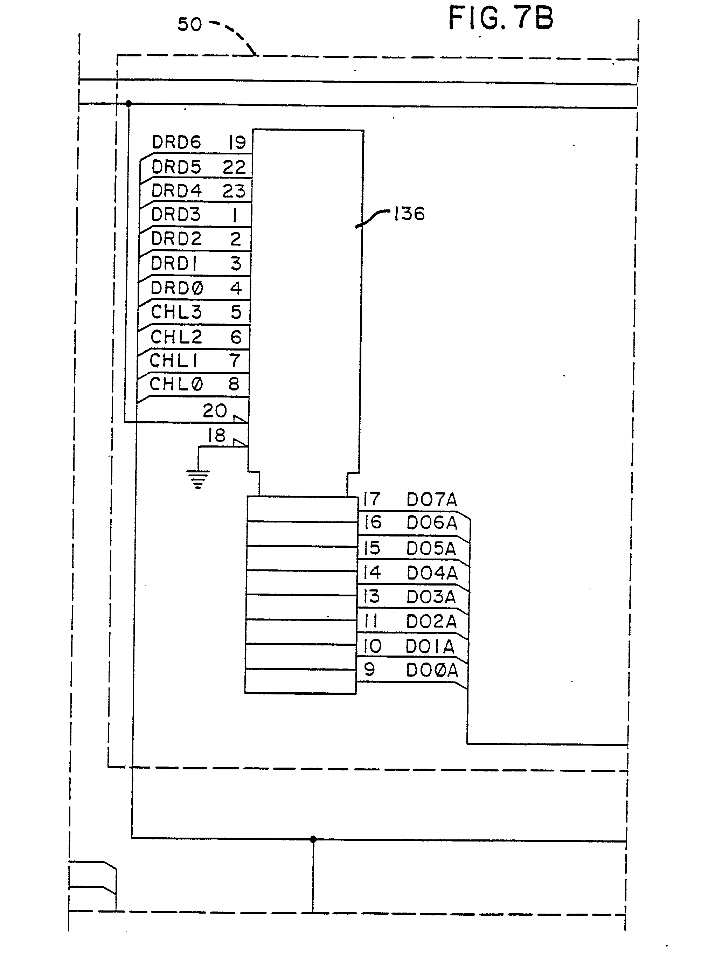

The character generator 50 is shown in detail in Figs. 7B to 7E, and includes four individual read only memories 136, 138, 140, 142, which may be of the electrically programmable read only memory type 2716. In the illustrated embodiment, the character generator 50 has a capacity to store dot matrix patterns for two complete character fonts of 128 characters each, one of said fonts being upright in orientation and the other being disposed in horizontal orientation. The memories 136 and 140 store dot matrix patterns for bottom and top halves, respectively, of the horizontally disposed font, while the memories 138 and 142 store dot matrix patterns for the right and left sides, respectively, of the upright font.

Font selection is accomplished by the various TEXT signals from the mode control block 48. TEXT1 and TEXT2 signals are applied to a NOR gate 144, with the output signal from that gate being applied to inputs of memories 136 and 140. A TEXT3/ signal is applied to corresponding inputs of memories 138 and 142. It will be seen that a TEXT1 or TEXT2 signal will result in the selection of a horizontal font stored in memories 136 and 140, while a TEXT3/ signal results in a selection of the vertical font stored in memories 138 and 142.

The address inputs are shown on the left side of each of the memories 136, 138, 140, 142, and include the lines CHL0—CHL3 inclusive (all of which come from the row counter 62), and DRD0—DRD6 inclusive (all of which come from the buffer 42). In each case, the address lines DRD0—DRD6 select a desired character, while the address lines CHL0—CHL3 select a desired dot matrix row of that character. Thus any one of a possible 128 characters can be selected, and any one of 16 rows of each character can be selected. The actual number of character patterns in the character generator 50 may, of course, be less than that.

The outputs of the character generator memories 136, 138, 140, 142 are shown on the right side of each of the memories and include the lines DO0A—DO15A, with outputs DO0A to DO7A coming from memories 136 and 138, and with outputs DO8A to DO15A coming from memories 140 and 142. These outputs are applied in parallel to the shift register 64, together with two clock inputs one of which (SRLOAD) is from the clock divider 54, and the other of which (SHCLK) is a system clock provided by the utilizing device.

The clock divider 54 is shown in detail in Figs. 9A and 9B, and includes a pair of counters 150 and 152, which may be of type 74LS191. These counters are driven by a clock signal SHCLK derived from the clock signal SHCLK/ passing through an inverter 154, which may be of type 74LS04, and carried on a conductor 155. The clock signal SHCLK/, in turn, is derived from the system clock SCLK by circuitry which does not constitute a part of the present invention. The SHCLK/ clock signal is disabled whenever the system is in the write mode and whenever the printer or other utilizing device is not ready to accept data.

The clock divider 54 is present for each read operation by the mode control block 48, as may be seen by the signals TEXT3, TEXT3/ and TEXT2 applied to the counters 150 and 152. In the illustrated embodiment, the clock divider 54 is preset to values of 20, 19 and 12, for modes I, II, and III, respectively.

A conductor 156 connects output pin 13 of counter 150 to input pin 4 of counter 152. Output pin 13 of counter 152 is connected through an inverter 157, which may be of type 74LS04, by a conductor 158 to one input of a NOR gate 160, which may be of type 74LS02, the output of which is applied by conductor 162 to pin 11 of the counters 150 and 152. The other input of the gate 160 is connected to a new line initiate signal on conductor 164, which provides a pulse at the initiation of each read cycle, through circuitry which does not form a part of the present invention.

The conductor 162, through an inverter 166, which may be of type 74LS04, provides the output signals SRLOAD and MEMCNT. The signal MEMCNT is applied to the gating logic 52 and the signal SRLOAD is applied to the shift register 64 to control the loading of said register.

The divide-by-eight circuit 70 divides the clock signal SHCLK/ by a factor of eight. It is shown in detail in Figs. 9C and 9D, and includes a counter 170 which may be of type 74LS161. The clock signal SHCLK is applied over the conductor 155 to the input of the counter 170.

The reset input of the counter is connected to a logic circuit which includes an inverter 172, which may be of type 74LS04; a NOR gate 174, which may be of type 74LS02; and an AND gate 176, which may be of type 74LS08. A signal RLTERP/, which originates outside the system of the present invention, and indicates the end of a line, is inverted by the inverter 172 and is applied to as one input to the NOR gate 174. The other input of said NOR gate is connected by a conductor 178 to an output of the counter 170. The output of the NOR gate 174 is connected to one input of the AND gate 176, the other input of which is connected to a new line initiate signal on conductor 180, which provides a pulse at the initiation of each read cycle, through circuitry which does not form a part of the present invention. The output of the AND gate 176 is applied to the reset input of counter 170.

Other inputs of the counter 170 are connected by a conductor 182 to the PUP3 line, which is connected through a 1,000-ohm pull-up resistor to a plus 5-volt source.

The output from the counter 170 is applied to a logic circuit which includes a flip-flop 184 which may be of type 74LS74; an AND gate 186 which may be of type 74LS08; a flip-flop 188 which may be of type 74LS273; an inverter 190 which may be of type 74LS04; and an AND gate 192 which may be of type 74LS08.

Two inputs of the flip-flop 184 are connected to the previously-mentioned PUP3 line, while the clock input is connected to the conductor 178 from the counter 170, and the reset input is connected to the output of the inverter 190 by a conductor 194. A first output of the flip-flop 184 is connected to one input of the AND gate 186, and a second output is connected to one input of the AND gate 192.

The second input of the AND gate 186 is connected to a READY signal over conductor 196. The READY signal is generated from outside the system and indicates that the utilizing device is not in a "busy" condition.

The output of the AND gate 186 is connected to one input of the flip-flop 188, while the clock input of that flip-flop is connected by a conductor 198 to a clock signal SCLKQ, which is the system clock signal SCLK divided by four, and the reset input of the flip-flop 188 is connected by a conductor 200 to a system reset signal RST1/. The output of the flip-flop 188 provides the desired output signal PICLK, and is also connected through the inverter 190 to the previously mentioned conductor 194.

The conductor 194 is also applied to one input of the AND gate 192, the other input of which, it will be recalled, is connected to one output of the flip-flop 184. The output of the gate 192 provides the signal PICLKF/.

The shift register 64 changes the parallel lines of data coming from the character generator 50 into a serial data flow. It is shown in detail in Fig. 10, and includes two shift registers 202 and 204, which may be of type 74LS165. A conductor 206 extends from an output from pin 9 of register 202 to an input at pin 10 of register 204. The output taken from pin 9 of register 204 provides the output signal DOTDAT containing the serial data flow which is applied to the register 66.

Load signal SRLOAD and clock signal SHCLK/ are inverted by inverters 208 and 210, respectively, which may be of type 74LS04, and are applied by conductors 212 and 214 to appropriate inputs 1 and 2 of the shift registers 202 and 204. As previously noted, the relationship between SRLOAD signal and the SHCLK signal determines the number of dot matrix positions per character for a given mode. In other words, in mode I, there are twenty SHCLK/ signals for each SRLOAD signal.

The shift register 66 is shown in detail in Fig. 11, and includes a shift register 206 which may be of type 74LS164. The DOTDAT serial data flow line is applied to pins 1 and 2 of the register 206 from the output of the shift register 64. The clock signal SHCLK and the reset signal RST2/ are applied to the Clock and Reset inputs, respectively, of the register 206. This register changes the serial dot information back into parallel form, eight bits wide, to adapt said data for use by a utilizing device, such as a printer or display.

The latch 68 is shown in detail in Fig. 11, and includes an octal D-type flip-flop 208, which may be of type 74LS374. The eight parallel data output lines from the register 66 are applied to corresponding inputs of the flip-flop 208. The clock signal PICLK from the divide-by-eight circuit 70 is applied to pin 11 of the register 208 and an ENABLE/ signal is applied to pin 1 of said register. The latch 68 serves to receive information on eight parallel data lines and to latch that information, holding it until the utilizing device is ready to accept it, and then outputting it on lines RD0—RD7.

## Claims

1. Character format control apparatus for formatting characters wherein each character is formed by a plurality of successive rows including dots or similar indicia arranged within a matrix cell having matrix positions occupied by such dots or indicia, including buffer storage means (42) adapted to store input data defining characters to be formatted, character generator means (50) adapted to be addressed in dependence on the stored input data, to provide output data in successive rows stored in said character generator means (50) in accordance with the matrix cell arrangement, and first (54) and second (62) counter means, characterized in that there is provided mode control means (48) adapted to produce a plurality of mode control signals corresponding to respective character spacing arrangements, in that said first counter means (54) is adapted to be set in response to a selected mode control signal to count a first selected number of matrix positions per matrix row, which selected number is determined by said selected mode control signal, in that said second counter means (62) is coupled to said character generator means (50) and is adapted to be set in response to said selected mode control signal to count a second selected number of successive matrix rows, which selected number is determined by said selected mode control signal, and in that there is provided register means (64, 66) coupled to said character generator means (50) and to said first counter means (54) and adapted to provide successive rows of formatted information for matrix reproduction, each row including said first selected number of matrix positions.

2. Apparatus according to claim 1, characterized by third counter means (46) coupled to said buffer storage means (42) and adapted to be set in response to said mode control signal to count a selected number of characters to be included in a line of characters.

3. Apparatus according to claim 2, characterized in that said register means includes a first shift register (64) having a parallel input and a serial output, a second shift register (66) having a serial input coupled to said serial output and a parallel output, and a storage device (68) coupled to said parallel output and adapted to provide parallel formatted information for a utilization device.

4. Apparatus according to claim 3, characterized in that the formatted characters included in respective uniformly sized matrix cells are smaller than the matrix cells.

5. Apparatus according to claim 4, characterized in that said first selected number does not exceed the number of matrix positions per row of the matrix cells and is not less than the number of matrix positions required to form the rows of the character within the matrix cell.

6. Appatus according to claim 4, characterized in that said second selected number does not exceed the number of rows in the matrix cells and is not less than the number of rows required to form the rows of the character within the matrix cell.

7. Apparatus according to claim 1, characterized in that said character generator means (50) is adapted to store data for a plurality of fonts of characters and in that said mode control signal is arranged to render a selected one of the stored character fonts available for access.

8. A method of controlling the formatting of characters, wherein each character is formed by a plurality of successive rows including dots or similar indicia arranged within a matrix cell having matrix positions occupied by such dots or indicia, including the steps of inputting data defining characters to be formatted, and addressing a memory in dependence on the inputted data in order to provide output data, stored in said memory, in successive rows in accordance with the matrix cell arrangement, characterized by the steps of selecting a first desired number of matrix positions per matrix row for the characters to be formatted, which first number is representative of a desired character spacing in the direction of said matrix rows, selecting a second desired number of successive matrix rows for characters to be formatted, which second number is representative of a desired character spacing in a direction perpendicular to the matrix rows, providing a row of formatted character information having said first desired number of matrix positions and including the outputted data, and repeating said step of providing a row of formatted character information a number of times corresponding to said second desired number.

9. A method according to claim 8, characterized by the step of additionally selecting the number of characters to be included in a line of characters to be formatted.

**Patentansprüche**

1. Zeichenformat-Steuergerät zum Formatieren von Zeichen, wobei jedes Zeichen durch eine Vielzahl aufeinanderfolgender Reihen gebildet wird, die Punkte oder ähnliche Markierungen aufweisen, die innerhalb einer Matrixzelle angeordnet sind, die Matrixpositionen aufweist, die von solchen Punkten oder Markierungen eingenommen werden, mit einer Pufferspeichervorrichtung (42), die geeignet ist Eingangsdaten zu speichern, die zu formatierende Zeichen definieren, einer Zeichengeneratorvorrichtung (50), die geeignet ist abhängig von den gespeicherten Eingangsdaten adressiert zu werden, um Ausgangsdaten in aufeinanderfolgenden Reihen abzugeben, die gemäß der Matrixzellenanordnung in der Zeichengeneratorvorrichtung (50) gespeichert sind, und mit einer ersten (54) und zweiten (62) Zählervorrichtung, dadurch gekennzeichnet, daß eine Betriebsart-Steuervorrichtung (48) vorgesehen ist, die geeignet ist, eine Vielzahl von Betriebsart-Steuersignalen in Einklang mit entsprechenden Zeichenabstandsanordnungen abzugeben, daß die erste Zählervorrichtung (54) geeignet ist, unter Ansprechen auf ein ausgewähltes Betriebs-Steuersignal gesetzt zu werden, um eine erste gewählte Anzahl von Matrixpositionen pro Matrixreihe zu zählen, welche gewählte Anzahl bestimmt ist durch das ausgewählte Betriebsart-Steuersignal, daß die zweite Zählervorrichtung (62) mit der Zeichengeneratorvorrichtung (50) gekoppelt und geeignet ist, unter Ansprechen auf das gewählte Betriebsart-Steuersignal gesetzt zu werden, um eine zweite gewählte Anzahl aufeinanderfolgender Matrixreihen zu zählen, welche gewählte Anzahl bestimmt ist durch das gewählte Betriebsart-Steuersignal, und daß Registervorrichtungen (64, 66) vorgesehen sind, die mit der Zeichengeneratorvorrichtung (50) und der ersten Zählervorrichtung (54) gekoppelt und geeignet sind, aufeinanderfolgende Reihen von formatierter Information für eine Matrixwiedergabe zu erzeugen, wobei jede Reihe die erste gewählte Anzahl von Matrixpositionen aufweist.

2. Gerät nach Anspruch 1, gekennzeichnet durch eine dritte Zählervorrichtung (46), die mit der Pufferspeichervorrichtung (42) gekoppelt und geeignet ist, unter Ansprechen auf das Betriebsart-Steuersignal gesetzt zu werden, um eine gewählte Anzahl von Zeichen zu zählen, die in einer Zeile von Zeichen vorzusehen sind.

3. Gerät nach Anspruch 2, dadurch gekennzeichnet, daß die Registervorrichtungen ein erstes Schieberegister (64) mit einem parallelen Eingang und einem seriellen Ausgang, ein zweites Schieberegister (66) mit einem seriellen Eingang, der mit dem seriellen Ausgang gekoppelt ist, und einem parallelen Ausgang, und eine Speichervorrichtung (68) aufweisen, die mit dem parallelen Ausgang gekoppelt und geeignet ist, parallel formatierte Information für eine Verwendungsvorrichtung abzugeben.

4. Gerät nach Anspruch 3, dadurch gekennzeichnet, daß die formatierten Zeichen, die in entsprechenden gleichförmig bemessenen Matrixzellen enthalten sind, kleiner sind als die Matrixzellen.

5. Gerät nach Anspruch 4, dadurch gekennzeichnet, daß die erste gewählte Anzahl die Anzahl von Matrixpositionen pro Reihe der Matrixzellen nicht überschreitet und nicht geringer ist als die Anzahl von Matrixpositionen, die erforderlich sind, um die Reihen der Zeichen innerhalb der Matrixzelle zu bilden.

6. Gerät nach Anspruch 4, dadurch gekennzeichnet, daß die zweite gewählte Anzahl die Anzahl von Reihen in den Matrixzellen nicht überschreitet und nicht geringer ist als die Anzahl von Reihen, die erforderlich sind, um die Reihen des Zeichens innerhalb der Matrixzelle zu bilden.

7. Gerät nach Anspruch 1, dadurch gekennzeichnet, daß die Zeichengeneratorvorrichtung (50) geeignet ist, Daten für eine Vielzahl von Zeichenvorräten zu speichern und daß das Betriebsart-Steuersignal angeordnet ist, um einen gewählten der gespeicherten Zeichenvorräte zugreifbar zu machen.

8. Verfahren zum Steuern der Formatierung von Zeichen, wobei jedes Zeichen gebildet ist aus einer Vielzahl von aufeinander folgenden Reihen, die Punkte oder ähnliche Markierungen aufweisen, die innerhalb einer Matrixzelle angeordnet sind, welche Matrixpositionen besitzt, die von diesen Punkten oder Markierungen eingenommen werden, mit den Schritten: Eingeben von zu formatierenden Zeichen definierenden Daten und Adressieren eines Speichers abhängig von den eingegebenen Daten, um Ausgangsdaten abzugeben, die in dem Speicher in aufeinanderfolgenden Reihen gemäß der Matrixzellenanordnung gespeichert sind, gekennzeichnet durch die Schritte; Wählen einer ersten gewünschten Anzahl von Matrixpositionen pro Matrixreihe für die zu formatierenden Zeichen, welche erste Anzahl einen gewünschten Zeichenabstand in Richtung der Matrixreihen darstellt, Wählen einer zweiten gewünschten Anzahl von aufeinanderfolgende Matrixreihen, für die zu formatierenden Zeichen, welche zweite Anzahl einen gewünschten Zeichenabstand in einer Richtung senkrecht zu den Matrixreihen darstellt, Abgeben einer Reihe von formatierter Zeicheninformation mit der ersten gewünschten Anzahl von Matrixpositionen und die die ausgegebenen Daten enthält, und Wiederholen des Schrittes: Abgeben einer Reihe von formatierter Zeicheninformation für eine Anzahl von Malen entsprechend der zweiten gewünschten Anzahl.

9. Verfahren nach Anspruch 8, gekennzeichnet durch den Schritt: Zusätzliches Wählen der Anzahl von in einer Zeile von zu formatierenden Zeichen anzuordnenden Zeichen.

**Revendications**

1. Appareil de commande d'édition de caractères, destiné à l'édition de caractères, dans lequel chaque caractère est formé de plusieurs rangées successives comprenant des points ou des signes similaires disposés à l'intérieur d'une cellule matricielle présentant des positions de matrice occupées par ces points ou signes, comprenant une mémoire tampon (42) destinée à mémoriser des données d'entrée définissant des caractères à éditer, un générateur (50) de caractères destiné à être adressé sous la dépendance des données d'entrée mémorisées pour produire des données de sortie en rangées successives mémorisées dans ledit générateur (50) de caractères, conformément à l'agencement de la cellule matricielle, et des premier (54) et second (62) compteurs, caractérisé en ce qu'il est prévu un dispositif (48) de commande de mode conçu pour produire plusieurs signaux de commande de mode correspondant à des dispositions d'espacement de caractères respectifs, en ce que ledit premier compteur (54) est conçu pour être positionné en réponse à un signal de commande de mode choisi afin de compter un premier nombre choisi de positions de matrice par rangée de matrice, lequel nombre choisi est déterminé par ledit signal de commande de mode choisi, en ce que ledit second compteur (62) est relié audit générateur (50) de caractères et est conçu pour être positionné en réponse audit signal de commande de mode choisi pour compter un second nombre choisi de rangées de matrice successives, lequel nombre choisi est déterminé par ledit signal de commande de mode choisi, et en ce qu'il est prévu des moyens à registres (64, 66) reliés audit générateur (50) de caractères et audit premier compteur (54) et conçus pour produire des rangées successives d'informations éditées pour une reproduction matricielle, chaque rangée comprenant ledit premier nombre choisi de positions de matrice.

2. Appareil selon la revendication 1, caractérisé par un troisième compteur (46) relié à ladite mémoire tampon (42) et conçu pour être positionné en réponse audit signal de commande de mode afin de compter un nombre choisi de caractères à incorporer dans une ligne de caractères.

3. Appareil selon la revendication 2, caractérisé en ce que lesdits moyens à registres comprennent un premier registre à décalage (64) ayant une entrée parallèle et une sortie série, un second registre à décalage (66) ayant une entrée série reliée à ladite sortie série et une sortie parallèle, et un dispositif de mémorisation (68) relié à ladite sortie parallèle et conçu pour produire une information éditée en parallèle et destinée à un dispositif d'utilisation.

4. Appareil selon la revendication 3, caractérisé en ce que les caractères édités incorpores dans des cellules de matrice respectives, dimensionnées uniformément, sont plus petits que les cellules de matrice.

5. Appareil selon la revendication 4, caractérisé en ce que ledit premier nombre choisi ne dépasse pas le nombre de positions de matrice par rangée des cellules de matrice et n'est pas inférieur au nombre de positions de matrice demandé pour former les rangées du caractère dans la cellule de matrice.

6. Appareil selon la revendication 4, caractérisé en ce que ledit second nombre choisi ne dépasse pas le nombre de rangées dans les cellules de matrice et n'est pas inférieur au nombre de rangées demandé pour former les rangées du caractère dans la cellule de matrice.

7. Appareil selon la revendication 1, caractérisé en ce que ledit générateur (50) de caractères est conçu pour mémoriser les données pour plusieurs polices de caractères et en ce que ledit signal de commande de mode est agencé pour permettre l'accès à l'une, choisie, des polices de caractères mémorisées.

8. Procédé de commande de l'édition de caractères, dans lequel chaque caractère est formé par plusieurs rangées successives comprenant des points ou des signes similaires disposés dans une cellule de matrice présentant des positions de matrice occupées par ces points ou signes, comprenant les étapes qui consistent à introduire des données définissant des caractères à éditer, et à adresser une mémoire sous la dépendance des données introduites afin de produire des données de sortie, enregistrées dans ladite mémoire, en rangées successives conformément à l'agencement des cellules de matrice, caractérisé par les étapes qui consistent à choisir un premier nombre souhaité de positions de matrice par rangée de matrice pour les caractères à éditer, lequel premier nombre est représentatif d'un espacement souhaité des caractères dans la direction desdites rangées de matrice, à choisir un second nombre souhaité de rangée de matrice successives pour caractères à éditer, lequel second nombre est représentatif d'un espacement souhaité des caractères dans une direction perpendiculaire aux rangées de matrice, à produire une rangée d'information de caractères éditée ayant ledit premier nombre souhaité de positions de matrice et comprenant les données de sortie, et à répéter ladite étape de production d'une rangée d'information de caractères éditée un nombre de fois correspondant audit second nombre souhaité.

9. Procédé selon la revendication 8, caractérisé par l'étape qui consiste en outre à choisir le nombre de caractères à incorporer dans une ligne de caractères à éditer.

FIG. IA

0 061 489

FIG. IB

FIG. 2

FIG. 3

85

64

FIG. 4

132

66

106

88

FIG. 5

3

# SYSTEM TIMING  FIG. 6

SHCLK

FORMAT: 85 CHARACTERS x 64 LINES

SRLOAD   20 SHCLK'S   20 SHCLK'S   20 SHCLK'S   20 SHCLK'S

AMEMCK   64 SRLOAD'S   64 SRLOAD'S

ROWCNTCK   12 AMEMCK'S

8 x 14
12 x 20

MODE I

FORMAT: 132 CHARACTERS x 66 LINES

SRLOAD   19 SHCLK'S   19 SHCLK'S   19 SHCLK'S   19 SHCLK'S

AMEMCK   66 SRLOAD'S   66 SRLOAD'S

ROWCNTCK   12 AMEMCK'S

8 x 14
12 x 19

MODE II

FORMAT: 106 CHARACTERS x 8 LINES/INCH

SRLOAD   12 SHCLK'S   12 SHCLK'S   12 SHCLK'S   12 SHCLK'S

AMEMCK   106 SRLOAD'S   106 SRLOAD'S

ROWCNTCK   19 AMEMCK'S

8 x 14
12 x 19

MODE III

0 061 489

0 061 489

# FIG. 7A

5

# FIG. 7B

| | |
|---|---|
| DRD6 | 19 |
| DRD5 | 22 |
| DRD4 | 23 |
| DRD3 | 1 |
| DRD2 | 2 |
| DRD1 | 3 |
| DRD0 | 4 |
| CHL3 | 5 |
| CHL2 | 6 |
| CHL1 | 7 |
| CHL0 | 8 |

20

18

136

| | |
|---|---|
| 17 | DO7A |
| 16 | DO6A |
| 15 | DO5A |
| 14 | DO4A |
| 13 | DO3A |
| 11 | DO2A |
| 10 | DO1A |
| 9 | DO0A |

50

# FIG. 7C

— 50

138

| | |
|---|---|
| DRD6 | 19 |
| DRD5 | 22 |
| DRD4 | 23 |
| DRD3 | 1 |
| DRD2 | 2 |
| DRD1 | 3 |
| DRD0 | 4 |
| CHL3 | 5 |
| CHL2 | 6 |
| CHL1 | 7 |
| CHL0 | 8 |
| 20 | |
| 18 | |

| | |
|---|---|
| 17 | DO7A |
| 16 | DO6A |
| 15 | DO5A |
| 14 | DO4A |
| 13 | DO3A |
| 11 | DO2A |
| 10 | DO1A |
| 9 | DO0A |

## FIG.7D

50

DRD6 19
DRD5 22
DRD4 23
DRD3 1
DRD2 2
DRD1 3
DRD0 4
CHL3 5
CHL2 6
CHL1 7
CHL0 8
20
18

140

17 DO15A
16 DO14A
15 DO13A
14 DO12A
13 DO11A
11 DO10A
10 DO9A
9 DO8A

# FIG.7E

50

DRD6 19
DRD5 22
DRD4 23
DRD3 1
DRD2 2
DRD1 3
DRD0 4
CHL3 5
CHL2 6
CHL1 7
CHL0 8
20
18

142

DO15A
DO14A
DO13A
DO12A
DO11A
DO10A
DO9A
DO8A

17 DO15A
16 DO14A
15 DO13A
14 DO12A
13 DO11A
11 DO10A
10 DO9A
9 DO8A

DO7A
DO6A
DO5A
DO4A
DO3A
DO2A
DO1A
DO0A

FIG. 7F

FIG. 7G

FIG.7H

# FIG. 8A

RELEASE

CTRLRG/ — 74

RST2/ — 73

75

RD7 — 3 — 2
RD6 — 4 — 5
RD5 — 7 — 6
RD4 — 8 — 9
RD3 — 13 — 12
RD2 — 14 — 15
RD1 — 17 — 16
RD0 — 18 — 19

48

FIG. 8B

48

76

TEXTEN

1    1    &    TEXT

77    78

TEXT3/
TEXT3
TEXT2
TEXT1

FIG.8C

FIG.8D

FIG. 9A

54

TEXT3

TEXT3/

TEXT2

0 061 489

FIG.9B

54

SRLOAD
MEMCNT

SHCLK

157

166

158

162

155

I2
I3
7
6
2
3

152

9
I0
I
I5
I4
II
5
4

I62

I56

FIG. 9C

0 061 489

FIG.9D

PICLK

PICLKF/

F/F  188

190

192

186  8

SCLKQ  198

F/F  184

5

6

2

3

4

1

PUP3

178

194

196

200

70

FIG.10

FIG. 11

SHCLK ——————— 8
RST2/ ——————— 9

DOTDAT ——————— 1
2    8

PICLK    11
ENABLE/    1

66

68

3    3    2
4    4    5
5    7    6
6    8    9
10    13    12
11    14    15
12    17    16
13    18    19

} RD0-7

206    208

0 061 489

| FIG.1A | FIG.1B |
|--------|--------|

| FIG. 7A | FIG. 7B | FIG. 7C | FIG. 7D | FIG. 7E |
|---------|---------|---------|---------|---------|
| FIG. 7F | FIG. 7G | FIG. 7H | | |

FIG.12

| FIG.8A | FIG.8B |
|--------|--------|
| FIG.8C | FIG.8D |

| FIG.9A | FIG.9B |
|--------|--------|
| FIG.9C | FIG.9D |